# EUROPÄISCHE PATENTSCHRIFT

(11) **EP 1 562 768 B1**
(45) Veröffentlichungstag und Bekanntmachung des Hinweises auf die Patenterteilung: **22.03.2006**
(21) Anmeldenummer: 03785492.4
(22) Anmeldetag: 05.11.2003
(51) Int. Cl.: B60J 7/12, B60J 7/14

(54) **VERDECK FÜR EIN CABRIOLET-FAHRZEUG**
HOOD FOR A CONVERTIBLE
CAPOTE POUR VEHICULE CABRIOLET

(30) Priorität: 08.11.2002 DE 10251961
(43) Veröffentlichungstag der Anmeldung: 17.08.2005
(73) Patentinhaber: Wilhelm Karmann GmbH, 49084 Osnabrück (DE)
(72) Erfinder: THEUERKAUF, Jürgen, 49565 Bramsche (DE)
(86) Internationale Anmeldenummer: PCT/DE2003/003666
(87) Internationale Veröffentlichungsnummer: WO 2004/041571

(56) Entgegenhaltungen:
- EP-A- 1 038 709
- DE-A- 19 801 876
- DE-A- 19 962 995

## Beschreibung

Die Erfindung betrifft ein Verdeck für ein Cabriolet-Fahrzeug nach der im Oberbegriff des Patentanspruches 1 näher definierten Art.

Bei Cabriolet-Fahrzeugen, wie aus der gattungsgemäßen DE 19962995 A bekannt ist deren Verdeck in einem geöffneten Zustand zusammengefaltet und üblicherweise in einem Ablageraum im Heckbereich des Fahrzeugs abgelegt ist, ist die Ablagehöhe bzw. Packhöhe des zusammengefalteten Daches von großer Bedeutung, da eine große Packhöhe die gestalterische Freiheit im Heckbereich des Fahrzeuges sowie die mögliche Dimensionierung eines Kofferraums erheblich einschränkt.

Aus der DE 100 51 436 A1 ist ein mehrteiliges Verdeck für ein Cabriolet-Fahrzeug bekannt, welches eine Dichtungsvorrichtung mit einer bewegbar gelagerten Dichtung zum Abdichten eines bewegbaren Dachteiles gegenüber einem angrenzenden Fahrzeugteil aufweist, wobei die Dichtung gegenüber dem bewegbaren Dachteil schwenkbar gelagert und relativ zu dem Dachteil in ihre Abdichtposition geschwenkt ist, wenn das bewegbare Dachteil eine abzudichtende Stellung einnimmt, und in eine Ablageposition geschwenkt ist, wenn das bewegbare Dachteil in eine dichtfunktionslose Stellung bewegt ist. Insbesondere handelt es sich bei dem bewegbaren Dachteil um ein Heckdachteil, das beim Öffnen des Verdecks gegensinnig unter einem Frontdachteil liegend in einem Ablageraum im Fahrzeugheck ablegbar ist, wobei die jeweils seitlich am Heckdachteil angeordnete Dichtung für ein Seitenfenster beim Ablegen des Heckdachteiles bezüglich diesem einwärts schwenkbar ist. Die Dichtung ist dabei derart in Richtung Fahrzeugmitte schwenkbar, daß das Heckdachteil und das Frontdachteil eng aufeinander liegen können und damit die Höhe des Ablageraums in etwa um das Maß der Dichtung reduziert sein kann.

Als Antriebseinrichtung zum Schwenkbewegen der Dichtung ist bei der DE 100 51 436 A1 beispielsweise eine Koppelstange vorgesehen, welche die bewegbare Dichtung mit dem bewegbaren Dachteil oder einem eine Relativbewegung gegenüber der Dichtung ausführenden Dachteil koppelt.

Eine weitere Möglichkeit einer Verlagerung eines äußeren Dachrahmenteiles hin zur Fahrzeugmitte bei einer Öffnungsbewegung eines Cabriolet-Faltverdecks ist in der DE 40 41 176 A1 beschrieben. Darin wird für eine Dichtungseinrichtung des Faltverdecks mit einem an dem Faltverdeck befestigten Dichtelement, das bei geschlossenem Faltverdeck an einem Randbereich einer geschlossenen Seitenscheibe abdichtend anliegt, vorgeschlagen, daß beim Öffnen des Faltverdecks ein Außenbereich des Dichtelements über eine im wesentlichen als Kulissenbahn ausgebildete verstelleinrichtung seitlich nach innen verschoben wird.

Mit diesen bekannten Lösungen ist jedoch bei einem mehrteiligen, Z-artig zusammenfaltbaren Verdeck aufgrund der gegensinnigen Ablage der jeweiligen Dachteile aufeinander nur eine geringe Reduktion der, Ablagehöhe des zusammengefalteten Dachpaketes zu erreichen.

Es ist daher Aufgabe der vorliegenden Erfindung, ein Verdeck für ein Cabriolet-Fahrzeug der eingangs näher beschriebenen Art zu schaffen, dessen Packhöhe in einer Faltstellung bei geöffnetem Verdeck weiter reduziert ist.

Erfindungsgemäß wird diese Aufgabe durch die im kennzeichnenden Teil des Patentanspruches 1 genannten Merkmale gelöst.

Die Ausgestaltung des erfindungsgemäßen Verdecks, bei dem die Dachsegmente in einer Faltstellung bei geöffnetem Verdeck mit gleichgerichteter Wölbung im wesentlichen aufeinander liegen und die äußeren Dachrahmenprofile des wenigstens einen mittleren Dachsegments mittels einer Führungseinrichtung gegenüber einer Position bei geschlossenem Verdeck um eine wenigstens annähernd zu der Fahrzeuglängsachse parallele Achse gedreht und in Richtung Fahrzeugmitte verlagert sind, hat den Vorteil einer besonders geringen Höhe im Faltzustand, so daß das abgelegte Verdeck in einem zugeordneten Verdeckablegeraum nur geringen Stauraum beansprucht. Die hierdurch gegebene Möglichkeit einer kleineren Dimensionierung des Ablegeraums für das Verdeck ermöglicht eine größere gestalterische Freiheit im Heckbereich des Fahrzeugs sowie die Schaffung eines vergrößerten Kofferraums.

Die äußeren Dachrahmenprofile im Sinne der Erfindung können hinsichtlich ihres Querschnitts, ihres Aufbaus und ihrer Materialzusammensetzung beliebig ausgeführt sein und Dichtungselemente z. B. in Bereichen, welche zur Anlage an angrenzende Bauteile wie Seitenfenster vorgesehen sind, aufweisen.

Bei einer besonders vorteilhaften und optisch ansprechenden Ausführung liegen die Dachsegmente in der Faltstellung derart aufeinander, daß ihre Wölbung jeweils einem Fahrzeugboden abgewandt ist, d. h, daß im Faltzustand ihre front- und heckseitigen Enden jeweils nach unten gerichtet sind. Jedoch ist es hiervon abweichend ebenfalls bei Erzielung einer geringen Packhöhe möglich, die Dachsegmente so zusammenzufalten, daß ihre Wölbung jeweils dem Fahrzeugboden zugewandt ist.

Eine konstruktiv einfache Drehung und Verlagerung der äußeren Dachrahmenprofile des vorzugsweise einen mittleren Dachsegments kann erzielt werden, wenn die Führungseinrichtung des äußeren Dachrahmenprofils eine mit dem Verdeckmechanismus gekoppelte Führungsstange aufweist, wobei das äußere Dachrahmenprofil an der Führungsstange axial verschieblich geführt ist und bei einer Axialbewegung gegenüber der Führungsstange bezüglich seiner Längsachse vorzugsweise um wenigstens annähernd 180° gedreht wird.

Die Führung des äußeren Dachrahmenprofils an der Führungsstange kann auf einfache Art und Weise mittels eines Nutensteins, welcher in eine in die Führungsstange spiralartig eingebrachte Nut eingreift, verwirklicht werden, wobei der Nutenstein zur axialen Verschiebung über ein Koppelelement an die Kinematik des Verdeckmechanismus gekoppelt ist.

Alternativ hierzu kann es gemäß einer weiteren bevorzugten Ausgestaltung auch vorgesehen sein, daß die Führungseinrichtung des äußeren Dachrahmenprofils des wenigstens einen mittleren Dachsegments eine an den Verdeckmechanismus gekoppelte Steuerstange aufweist, die um eine zur Fahrzeugquerachse parallele Schwenkachse schwenkbar ist und an der das äußere Dachrahmenprofil über eine Hebelanordnung angelenkt ist, wobei die Hebelanordnung über Schrägachsen schwenkbar ist, welche derart gewinkelt zur Schwenkachse der Steuerstange verlaufen, daß das äußere Dachrahmenprofil durch Verschwenkung der Steuerstange bezüglich seiner Längsachse bzw. einer zur Fahrzeuglängsachse parallelen Achse verdreht in Richtung Fahrzeugmitte verlagert wird.

Hiervon abweichend kann der Fachmann jedoch auch eine für den jeweiligen Anwendungsfall geeignete andere Konstruktion zur Drehung eines Bauteils gegenüber einem Führungselement wählen.

In bevorzugter Gestaltung ist das erfindungsgemäße Verdeck ein automatisch von einer geöffneten in eine geschlossene Position oder umgekehrt bewegbares Verdeck, wobei die Verdeckbewegung üblicherweise durch einen hydraulischen Antrieb erfolgt, welcher einen Verdeckmechanismus antreibt, der ein Verdeckgestänge, unter dem vorliegend sowohl eine Trageinrichtung für ein Textildach als auch ein sogenanntes Hardtop-Klappdach mit im wesentlichen starren Dachelementen zu verstehen ist, und gegebenenfalls einen Deckel für einen Verdeckaufnahmeraum sowie alle hierdurch bewegbaren Elemente umfaßt.

Insbesondere eignet sich die erfindungsgemäße Ausgestaltung des Verdecks für ein sogenanntes Softtop-Dach, bei dem die Dachsegmente mit einer flexiblen Dachhaut ausgebildet sind.

Im Falle, daß wenigstens das Heck-Dachsegment mit einer flexiblen Dachhaut ausgebildet ist, welche zwischen den dem Heck-Dachsegment zugeordneten äußeren Dachrahmenprofilen aufgenommen ist und eine formstabile Heckscheibe einfaßt, kann eine signifikante Reduzierung der Packhöhe des Verdecks in dem abgelegten Faltzustand erreicht werden, wenn die Heckscheibe und die äußeren Dachrahmenprofile des Heck-Dachsegments in einer gleichsinnigen Bewegung in die Faltstellung oder aus ihr überführt werden.

Durch die gleichsinnige Bewegung der hier sogenannte Hauptsäulen darstellenden äußeren Dachrahmenprofile und der Heckscheibe kann das Verdeck mit deutlich geringeren Stofflängen für die textile Dachhaut realisiert werden, wodurch auch der Bereich der C-Säule des Fahrzeugs sehr schmal gestaltet werden kann.

Eine besonders geringe Stoffmenge für die textile Dachhaut wird insbesondere dann benötigt, wenn die Heckscheibe und die äußeren Dachrahmenprofile des Heck-Dachsegments während ihrer Bewegung in die Faltstellung oder aus ihr im wesentlichen parallel zueinander angeordnet sind.

Die gleichsinnige und vorzugsweise parallele Bewegung der Heckscheibe und der äußeren Dachrahmenprofile des Heck-Dachsegments kann auf konstruktiv einfache Weise mittels einer Anbindung eines äußeren Dachrahmenprofils des Heck-Dachsegments an einen an eine Karosserie angelenkten Viergelenk-Mechanismus realisiert werden, wobei von dem Viergelenk-Mechanismus zwei Gelenke karosseriefest und zwei an dem jeweiligen äußeren Dachrahmenprofil vorgesehen sind.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele eines Verdecks nach der Erfindung sind in der Zeichnung schematisch vereinfacht dargestellt und werden in der nachfolgenden Beschreibung näher erläutert.

Es zeigt:
- Fig. 1: eine vereinfachte dreidimensionale Ansicht eines erfindungsgemäßen Verdecks für ein Cabriolet-Fahrzeug in Alleinstellung, wobei sich das Verdeck in Schließstellung befindet;
- Fig. 2: eine schematisierte Seitenansicht des in Schließstellung befindlichen Verdecks gemäß Fig. 1;
- Fig. 3: eine Ausschnittsdarstellung einer ersten Ausführung eines Verdeckmechanismus aus einer fahrzeugmittigen Perspektive frontwärts nach Einleitung einer Öffnungsbewegung des Verdecks gemäß Fig. 1 und Fig. 2;
- Fig. 4: eine weitere Seitenansicht des Verdecks nach Fig. 1 bis Fig. 3 während einer fortgesetzten Bewegungsphase der Verdeck-Öffnungsbewegung;
- Fig. 5: eine weitere Ausschnittsdarstellung des Verdeckmechanismus aus einer fahrzeuglinksseitigen Perspektive frontwärts bei der Öffnungsbewegung des Verdecks;
- Fig. 6: eine weitere Seitenansicht des Verdecks nach Fig. 1 bis Fig. 3, wobei das Verdeck weiter in Richtung Fahrzeugheck bewegt ist;
- Fig. 7: eine weitere Ausschnittsdarstellung des Verdeckmechanismus aus einer fahrzeugrechtsseitigen Perspektive frontwärts bei der Öffnungsbewegung des Verdecks;
- Fig. 8: eine weitere Bewegungsphase des Verdecks nach Fig. 1 bis Fig. 7, wobei das Verdeck gegenüber der Darstellung in Fig. 6 weiter in Richtung Fahrzeugheck bewegt ist;
- Fig. 9: eine Seitenansicht des Verdecks nach Fig. 1 bis Fig. 8 in Faltstellung bei vollständig geöffnetem Zustand;
- Fig. 10: das gemäß Fig. 9 in Faltstellung befindliche Verdeck in einer dreidimensionalen Ansicht aus einer fahrzeuglinksseitigen Perspektive frontwärts;
- Fig. 11: das in Faltstellung gemäß Fig. 9 und 10 befindliche Verdeck in einer Draufsicht;
- Fig. 12: einen vereinfachten Querschnitt entlang der Linie I-I in Fig. 5;
- Fig. 13: eine ausschnittsweise Draufsicht auf eine zweite Ausführung des verdeckmechanismus bei sich in Schließstellung befindendem Verdeck;
- Fig. 14: eine Seitenansicht des Verdeckmechanismus gemäß Fig. 15 bei sich in Schließstellung befindendem Verdeck aus einer fahrzeugmittigen Perspektive;
- Fig. 15: eine weitere, stark vereinfachte perspektivische Darstellung der zweiten Ausführung des Verdeckmechanismus bei sich in Schließstellung befindendem Verdeck;
- Fig. 16: den Verdeckmechanismus gemäß Fig. 15 während einer ersten Bewegungsphase des Verdecks nach Einleitung einer Verdeck-Öffnungsbewegung;
- Fig. 17: den Verdeckmechanismus gemäß Fig. 15 und Fig. 16 während einer Bewegungsphase des Verdecks, bei der das Verdeck weiter in Richtung Fahrzeugheck bewegt ist;
- Fig. 18: den Verdeckmechanismus gemäß Fig. 15 bis Fig. 17, wobei das Verdeck gegenüber der Darstellung in Fig. 17 weiter in Richtung Fahrzeugheck bewegt ist;
- Fig. 19: den Verdeckmechanismus gemäß Fig. 15 bis Fig. 18 in Faltstellung bei vollständig geöffnetem Verdeck; und
- Fig. 20: das Verdeck gemäß Fig. 13 bis Fig. 19 in Faltstellung aus einer fahrzeuglinksseitigen Perspektive heckwärts.

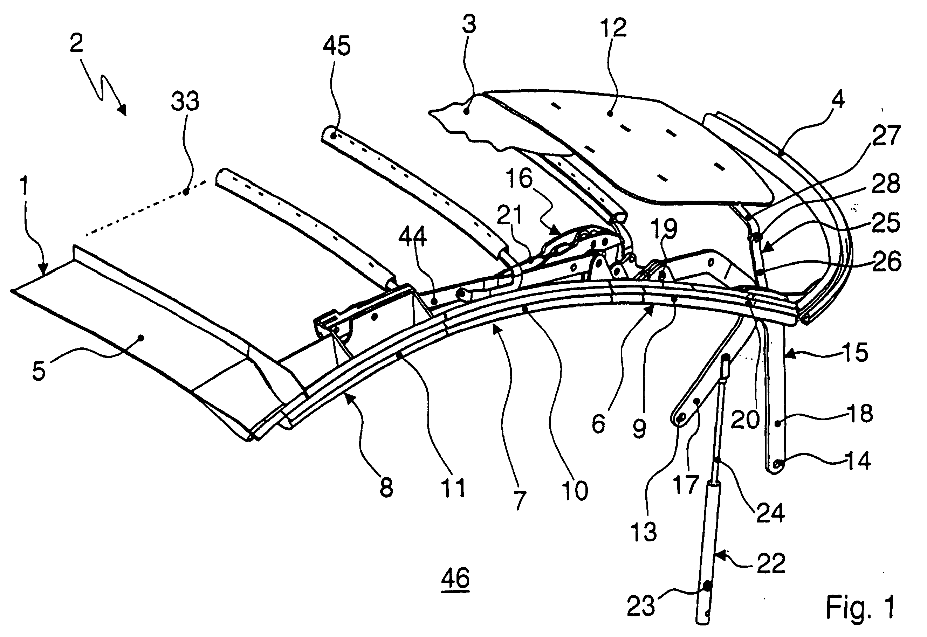

In Fig. 1 ist ein Verdeck 1 für ein insgesamt mit 2 bezeichnetes Cabriolet-Fahrzeug dargestellt, das eine flexible Dachhaut 3 aus z. B. mehrschichtigem Textilmaterial aufweist, die in Schließstellung des Verdecks 1 zwischen einem heckseitigen Hauptverdeckspannspriegel 4 und einer zur Anlage an einen Frontscheibenrahmen vorgesehenen formstabilen Dachspitze 5 verspannt ist. Die flexible Dachhaut 3, welche in Fig. 1 lediglich ausschnittsweise dargestellt ist, umspannt dabei ein Heck-Dachsegment 6, ein mittleres Dachsegment 7 und ein Front-Dachsegment 8 zwischen jeweils diesen Dachsegmenten zugeordneten, paarweise symmetrisch gegenüberliegend zu einer Fahrzeuglängsachse 33 angeordneten und die Ränder der Dachsegmente bildenden äußeren Dachrahmenprofilen 9, 10, 11, welche in der Zeichnung nur für eine Fahrzeughälfte dargestellt sind.

Im Bereich des Heck-Dachsegments 6 faßt die flexible Dachhaut 3 eine formstabile Heckscheibe 12 gegebenenfalls mit einem Rahmen ein.

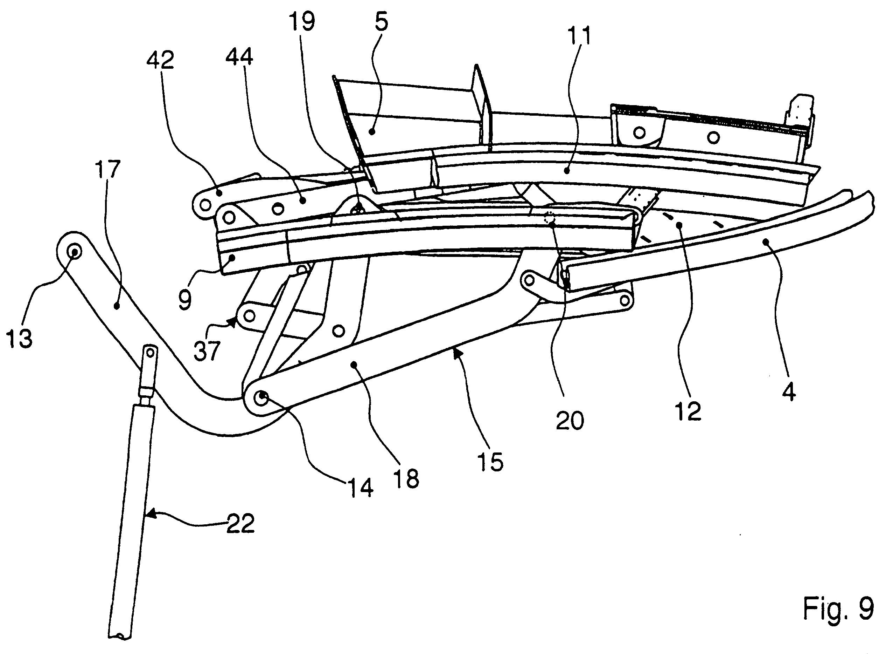

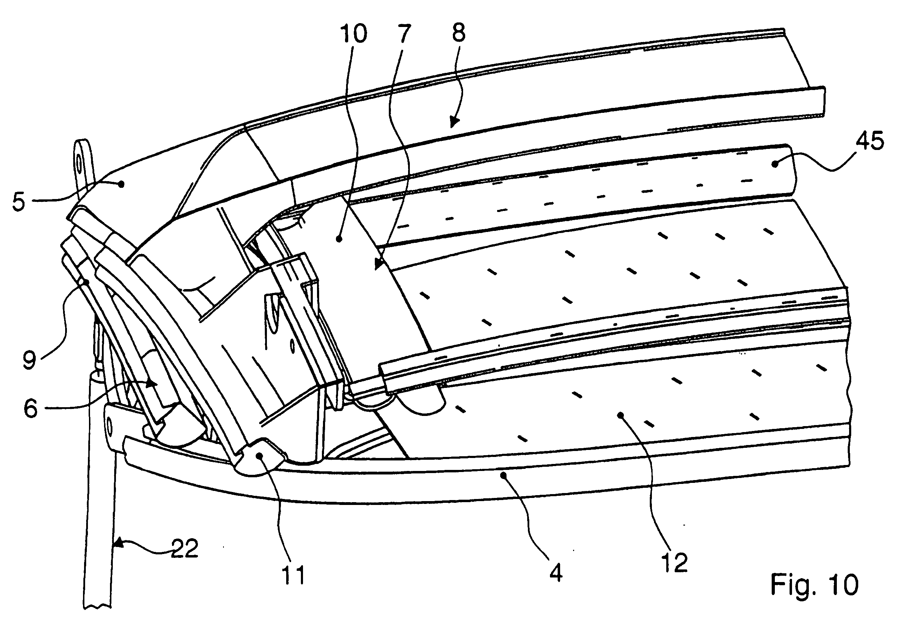

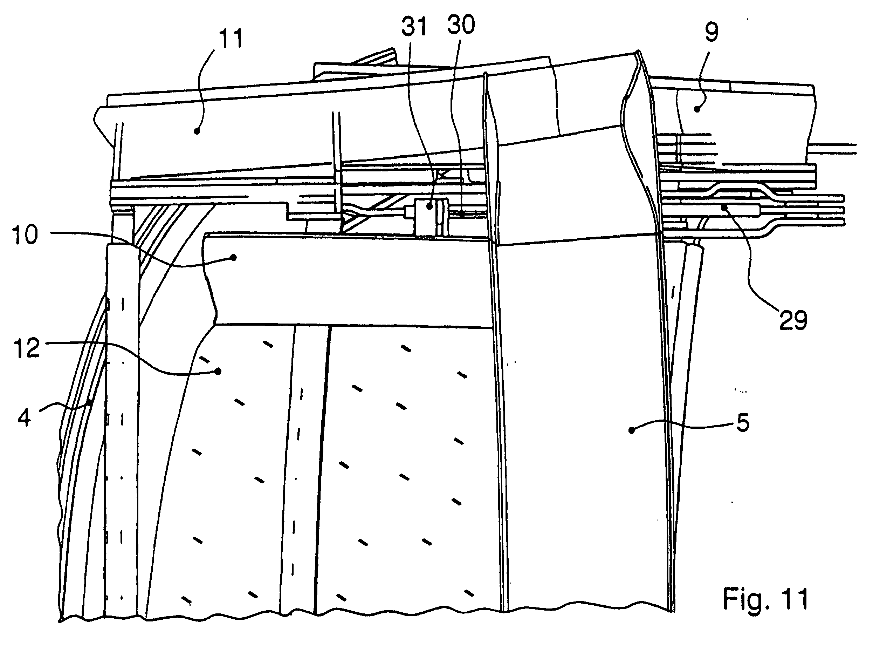

Die äußeren Dachrahmenprofile 9, 10, 11 sind Teil eines Verdeckmechanismus, über den das Verdeck 1 und damit die Dachsegmente 6, 7, 8 von einer ersten z. B. in den Fig. 1 bis Fig. 3 näher veranschaulichten Endstellung, welche eine Schließstellung des Verdecks darstellt, in eine zweite z. B. in den Fig. 9 bis Fig. 11 näher gezeigte Endlage, welche eine Faltstellung bei geöffnetem Verdeck 1 darstellt, überführbar und zusammenfaltbar ist.

Da der Verdeckmechanismus bei der vorliegenden Ausführung auf beiden Fahrzeugseiten gleich ausgeführt ist, treffen Ausführungen bezüglich dargestellter Elemente des Verdeckmechanismus ebenso auf die symmetrisch hierzu angeordneten Elemente der anderen, nicht gezeigten Fahrzeugseite zu.

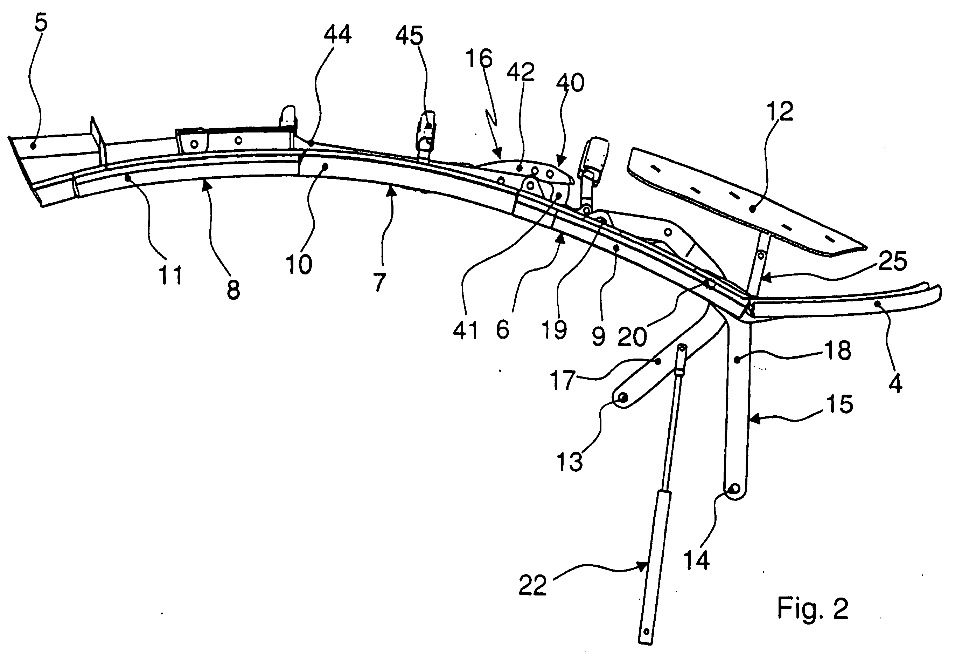

Wie beispielsweise der Fig. 1 und der Fig. 2 zu entnehmen ist, stellt das jeweilige äußere Dachrahmenprofil 9 des Heck-Dachsegments 6 eine sogenannte Hauptsäule dar, welche vorliegend an einen an zwei karosseriefesten Drehpunkten 13, 14 angelenkten Viergelenk-Mechanismus 15 und an eine Gelenkkette 16, welche die in die Hauptsäule 9 eingeleitete Bewegung auf weitere Elemente des Verdeckmechanismus überträgt, angebunden ist.

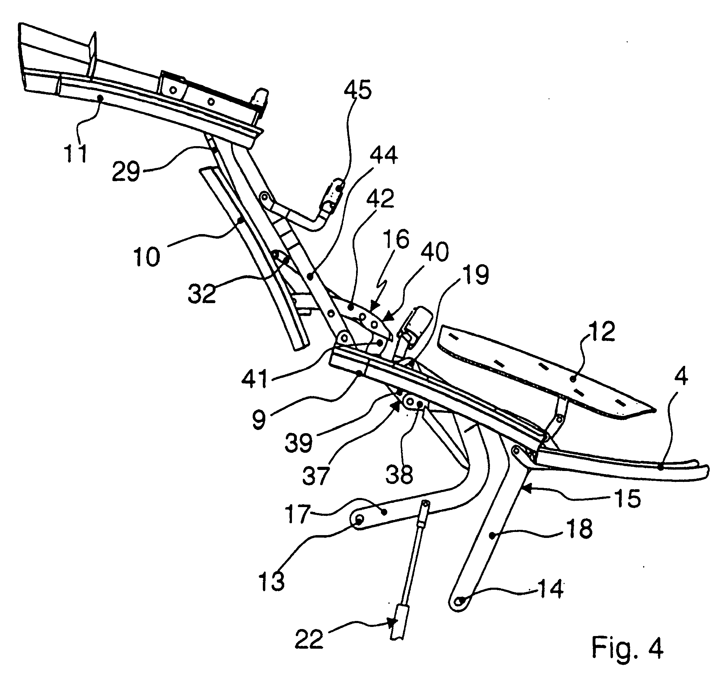

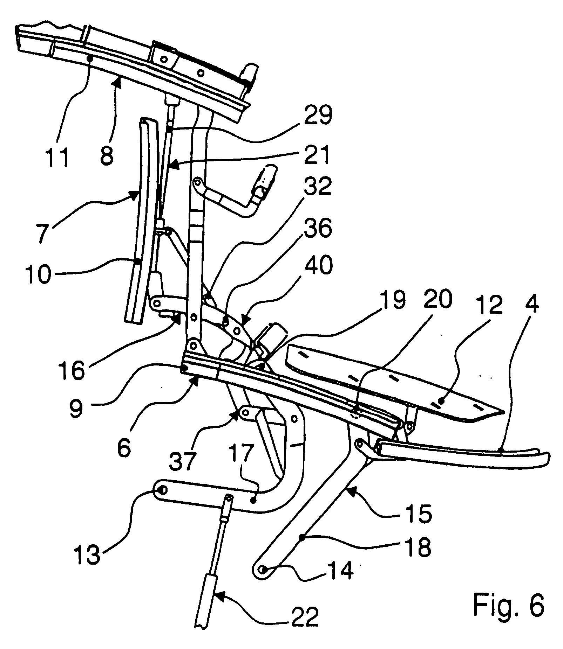

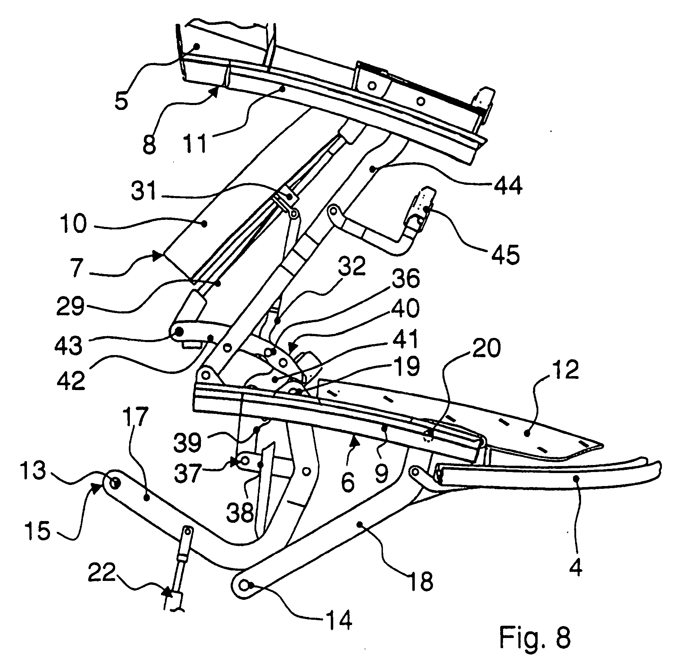

Die Fig. 1, 2, 4, 6, 8 und 9 veranschaulichen während verschiedener Bewegungsphasen des Verdecks 1 die Ausgestaltung und Funktionsweise des Viergelenk-Mechanismus 15, welcher mit einem ersten gewinkelten Hebel 17 und einem zweiten gewinkelten Hebel 18 ausgebildet ist, von denen jeder an einem karosseriefesten Drehpunkt 13 bzw. 14 und an dem äußeren Dachrahmenprofil 9 des Heck-Dachsegments 6 drehbar angelenkt ist.

Der erste Hebel 17 ist bei der vorliegenden Ausführung im wesentlichen U-förmig ausgebildet und mit einem Schenkelende an einem Gelenk 19 in einem in Schließstellung des Verdecks 1 frontwärtigen Bereich des äußeren Dachrahmenprofils 9 abgestützt und mit seinem anderen Schenkelende drehbar an dem ihm zugeordneten karosseriefesten Drehpunkt 13 angelenkt, welcher gegenüber dem karosseriefesten Drehpunkt 14 des zweiten Hebels 18 höher und frontwärts versetzt angeordnet ist.

Der zweite Hebel 18 ist vorliegend im wesentlichen L-förmig ausgebildet und mit seinem kürzeren Schenkel an einem Lager bzw. Gelenk 20 an einem heckwärtigen Bereich des äußeren Dachrahmenprofils 9 des Heck-Dachsegments 6 angelenkt und am Ende seines längeren Schenkels an den ihm zugeordneten karosseriefesten Drehpunkt 14 angebunden.

Zur Bewegung des Verdecks 1 zwischen seiner Schließstellung und seiner Faltstellung, bei der es zusammengefaltet mitsamt den Elementen seines Verdeckmechanismus in einem nicht näher dargestellten Verdeckkasten bzw. Verdeckaufnahmeraum abgelegt ist, ist hier ein per se bekannter Antrieb 22 vorgesehen, welcher elektrohydraulisch mit einem Antriebszylinder 23 und einer darin axial verschieblichen Antriebsstange 24 ausgebildet ist. Bei der gezeigten Ausführung ist es für den Kraftfluß günstig, wenn die Antriebsstange 24 des Antriebs 22 an dem zu dem karosseriefesten Drehpunkt 13 führenden Schenkel des ersten Hebels 17 angelenkt ist. Der Antrieb des Verdecks 1 kann jedoch auch an beliebig anderen, vom Fachmann als für den jeweiligen Anwendungsfall geeignet angesehenen Stellen des Verdeckmechanismus angreifen.

An den zweiten Hebel 18 des Viergelenk-Mechanismus 15 ist bei der gezeigten Ausführung ein die Heckscheibe 12 mit dem Viergelenk-Mechanismus 15 verbindender Gelenkbügel 25 angebunden, welcher aus zwei Schenkeln 26, 27 zusammengesetzt ist. Ein erster Schenkel 26 des Gelenkbügels 25 ist dabei starr an dem zweiten Hebel 18 des viergelenk-Mechanismus 15 befestigt sowie im wesentlichen axial zu dessen längerem Schenkel ausgerichtet und in Richtung Fahrzeugmitte geneigt. Ein zweiter Schenkel 27 des Gelenkbügels 25 ist im wesentlichen senkrecht zu dem ersten Schenkel 26 angeordnet, mit der, Heckscheibe 12 bzw. einem diese umgebenden Rahmen verbunden und mit dem ersten Schenkel 26 schwenkbar um eine Drehachse, welche in Fahrzeugquerrichtung verläuft, mittels eines Gelenks 28 verbunden.

Ebenfalls an dem zweiten Hebel 18 des Viergelenk-Mechanismus 15 ist bei der gezeigten Ausführung des Verdecks 1 der heckseitige Hauptverdeckspannspriegel 4 gelenkig gelagert.

Bei der Bewegung des Verdecks zwischen seinen Endlagen werden die Heckscheibe 12 und die äußeren Dachrahmenprofile 9 des Heck-Dachsegments 6 in einer gleichsinnigen Bewegung geführt, wobei die Heckscheibe 12 und die äußeren Dachrahmenprofile 9 des Heck-Dachsegments 6 während der Bewegung im wesentlichen parallel zueinander angeordnet sind.

Diese gleichsinnige Bewegung, welche in vorteilhafterweise durch den beschriebenen Viergelenk-Mechanismus 15 realisiert wird, jedoch in anderen Ausführungen durch einen weiteren, entsprechende Umlenkungen durchführenden Mechanismus verwirklicht sein kann, wird eine deutlich geringere Stofflänge benötigt, als dies bei Verdecken der Fall ist, bei der die Hauptsäule und die Heckscheibe während der Öffnungs- bzw. Schließbewegung des Verdecks gegeneinander verdreht werden. Damit ist auch die Packhöhe im abgelegten Faltzustand des Verdecks 1 entsprechend reduziert.

Eine deutliche Reduktion der Packhöhe des Verdecks im zusammengefalteten Zustand wird bei dem Verdeck 1 nach der Erfindung erreicht, indem die Dachsegmente 6, 7 und 8 in der Faltstellung bei geöffnetem Verdeck 1 mit gleichgerichteter Wölbung im wesentlichen aufeinander liegen und die äußeren Dachrahmenprofile 10 des mittleren Dachsegments 7 gegenüber einer Position bei geschlossenem Verdeck 1 auf nachstehend näher beschriebene Art und Weise in Richtung Fahrzeugmitte gedreht und verlagert sind.

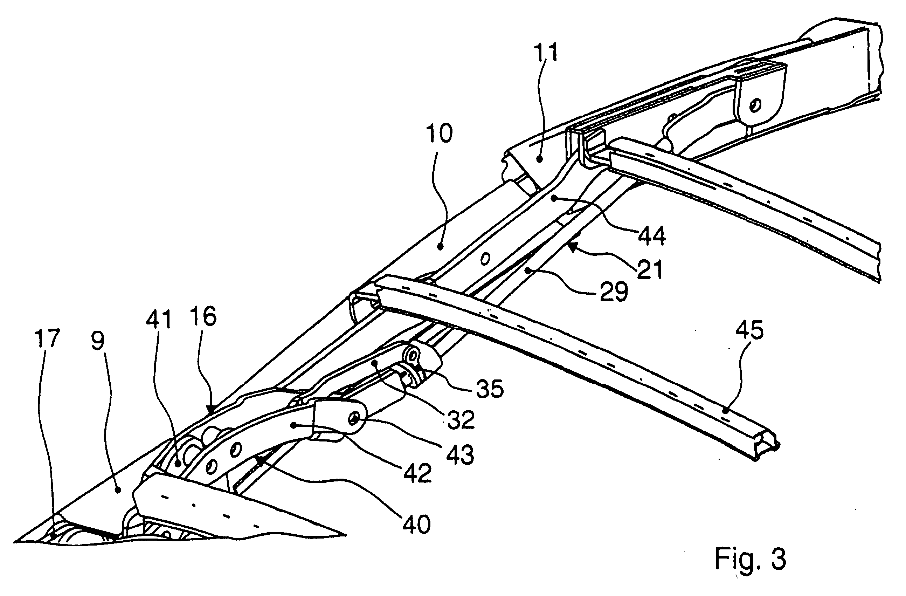

Zur Drehung des äußeren Dachrahmenprofils 10 des mittleren Dachsegments 7 in Richtung Fahrzeugmitte bei einer Öffnungsbewegung und in umgekehrte Richtung bei einer Schließbewegung des Verdecks 1 ist bei der Ausführung nach Fig. 1 bis Fig. 12 eine Führungseinrichtung 21 mit einer an den Verdeckmechanismus bewegungsgekoppelten Führungsstange 29 für das äußere Dachrahmenprofil 10 vorgesehen, wobei die Führung des äußeren Dachrahmenprofils 10 an der Führungsstange 29 bei dieser insbesondere in den Fig. 3 bis 8 näher veranschaulichten Ausgestaltung mittels einer kombinierten axialen und rotatorischen Bewegung verwirklicht ist, bei der die Axialbewegung des äußeren Dachrahmenprofils 10 gegenüber der Führungsstange 29 in Abhängigkeit der von der Gelenkkette 16 übertragenen Bewegung der Hauptsäule bzw. des äußeren Dachrahmenprofils 9 des Heck-Dachsegments 6 und des Antriebs 22 erfolgt.

Die Axialbewegung des äußeren Dachrahmenprofils 10 wird durch eine Führung, die hier als spiralförmig in die Führungsstange 29 eingebrachte Nut 30 ausgebildet ist, in eine rotätorische Bewegung des äußeren Dachrah- - menprofils 10 des mittleren Dachsegments 7 umgesetzt, indem das äußere Dachrahmenprofil 10 mittels eines Nutensteins 31, welcher über ein Koppelelement 32 an die Gelenkkette 16 und somit die Kinematik des Verdeckmechanismus gekoppelt ist, entlang der Nut 30 gleitet.

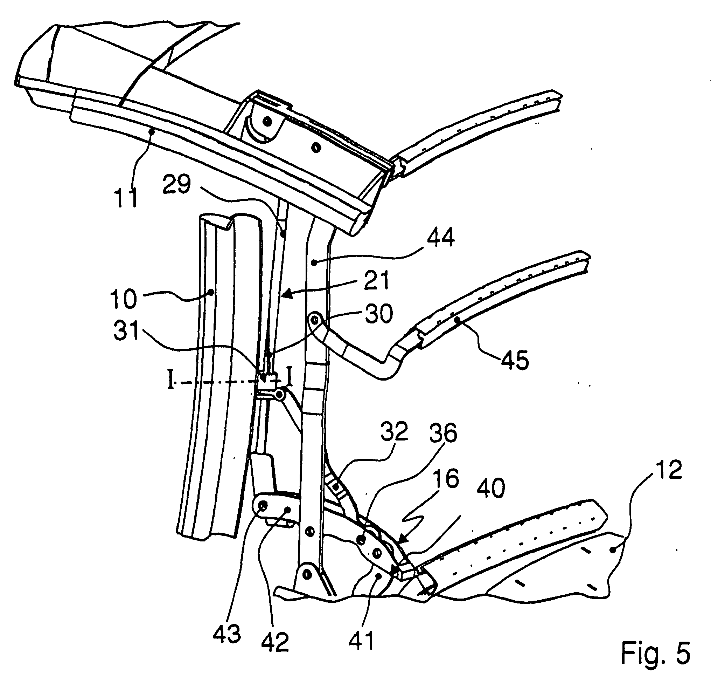

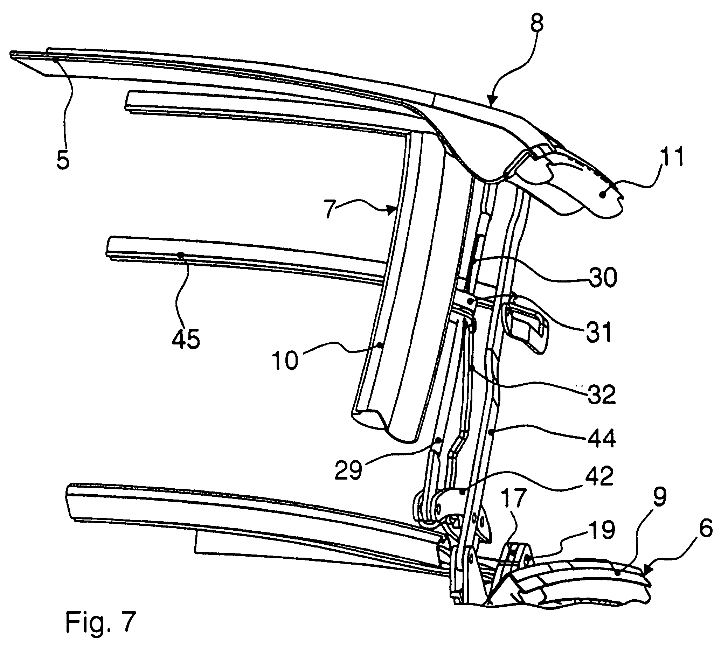

Aus einem Vergleich der Position des äußeren Dachrahmenprofils 10 des mittleren Dachsegments 7 gegenüber der Führungsstange 29 bei leicht geöffnetem Verdeck 1 gemäß Fig. 3, welche den Bereich der Führungsstange 29 von der Fahrzeugmitte aus betrachtet wiedergibt, während einer weiteren Bewegungsphase zum Öffnen des Verdecks 1, welche in Fig. 5 in einer Schrägansicht vom linken Heckbereich des Cabriolet-Fahrzeugs aus wiedergegeben ist, und während eines fortgesetzten Bewegungsstadiums der Öffnungsbewegung des Verdecks 1, welches in Fig. 7 aus einer Perspektive von einem linken Fahrzeugfrontbereich des Cabriolet-Fahrzeugs aus gezeigt ist, wird ersichtlich, daß das äußere Dachrahmenprofil 10 des mittleren Dachsegments 7 entlang der Führungsstange 29 verschoben wird und dabei eine Drehung um eine zur Fahrzeuglängsachse 33 parallele Achse um letztendlich 180° bis zum Erreichen der Faltstellung bei vollständig geöffnetem Verdeck 1 (Fig. 9 bis Fig. 11) erfährt.

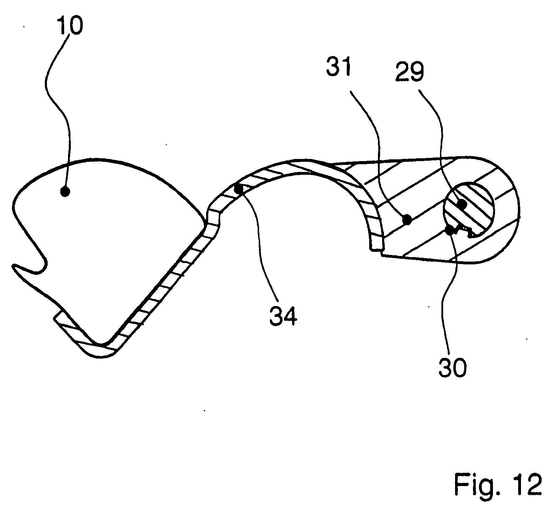

Die Verbindung zwischen dem äußeren Dachrahmenprofil 10 und der Führungsstange 29 kann dabei wie in Fig. 12 näher dargestellt, mittels eines jeweils fest an dem äußeren Dachrahmenprofil 10 und dem Nutenstein 31 befestigten Verbindungsbügels 34 erfolgen, jedoch kann in weiteren Ausführungen selbstverständlich eine andere vergleichbare Führung gewählt werden, wobei auch eine kinematische Umkehrung vorgesehen sein kann.

In der gezeigten bevorzugten Ausgestaltung ist die Führungsstange 29 gelenkig an einem Ende an das Front-Dachsegment 8 und an dem anderen Ende an die Gelenkkette 16 des Verdeckmechanismus angebunden. Das Koppelelement 32, welches den Nutenstein mit der Bewegungsabfolge des Verdeckmechanismus koppelt, ist stangenartig ausgeführt und an dem Nutenstein 31 durch einen in eine Rille des Nutensteins 31 eingreifenden Ringkörper 35, welcher mit dem stangenartigen Koppelelement 32 um eine in Fahrzeugquerrichtung verlaufende Schwenkachse schwenkbar gelagert ist, axial festgelegt sowie über eine Verdrehbarkeit zwischen dem Ringkörper 35 und dem Nutenstein 31 gegenüber letzterem drehbeweglich gelagert. An seinem dem Nutenstein 31 entgegengesetzten Ende ist das Koppelelement 32 über ein Gelenkglied 36 mit der Gelenkkette 16 des Verdeckmechanismus verbunden.

Zur Z-artigen Faltung der Dachsegmente 6, 7, 8 bei einer Öffnungsbewegung des Verdecks 1 ist die Gelenkkette 16 des Verdeckmechanismus mit einer ersten Gelenkschere 37 mit zwei Schenkeln 38, 39 und einer zweiten Gelenkschere 40 mit dem Schenkel 38 und einem weiteren Schenkel 42 ausgebildet, wobei die Gelenkscheren 37, 40 zueinander gegensinnig öffnen bzw. schließen und miteinander gelenkig drehverbunden sowie an dem äußeren Dachrahmenprofil 9 des Heck-Dachsegments 6 abgestützt sind.

Die erste Gelenkschere 37, welche gelenkig an den der Hauptsäule 9 zugewandten Schenkel des ersten Hebels 17 des Viergelenk-Mechanismus 15 angebunden ist, kann somit die in den Viergelenk-Mechanismus 15 und in die Hauptsäule 9 eingeleitete Bewegung über die zweite Gelenkschere 40 auf die Führungsstange 29 und das Koppelelement 32 und somit auf das äußere Dachrahmenprofil 10 des mittleren Dachsegments 7 übertragen. Der der Führungsstange 29 und dem Koppelelement 32 zugewandte Schenkel 42 ist hierzu als Gelenkschuh ausgebildet, welcher über das Gelenkglied 36 mit dem das äußere Dachrahmenprofil 10 des mittleren Dachsegments 7 an der Führungsstange 29 führenden Koppelelement 32 gelenkig verbunden ist und über ein weiteres Gelenk 43, welches in einem in Schließstellung des Verdecks 1 frontwärtigen Bereich des Schenkels bzw. Gelenkschuhs 42 angeordnet ist, mit der Führungsstange 29 gelenkig verbunden ist.

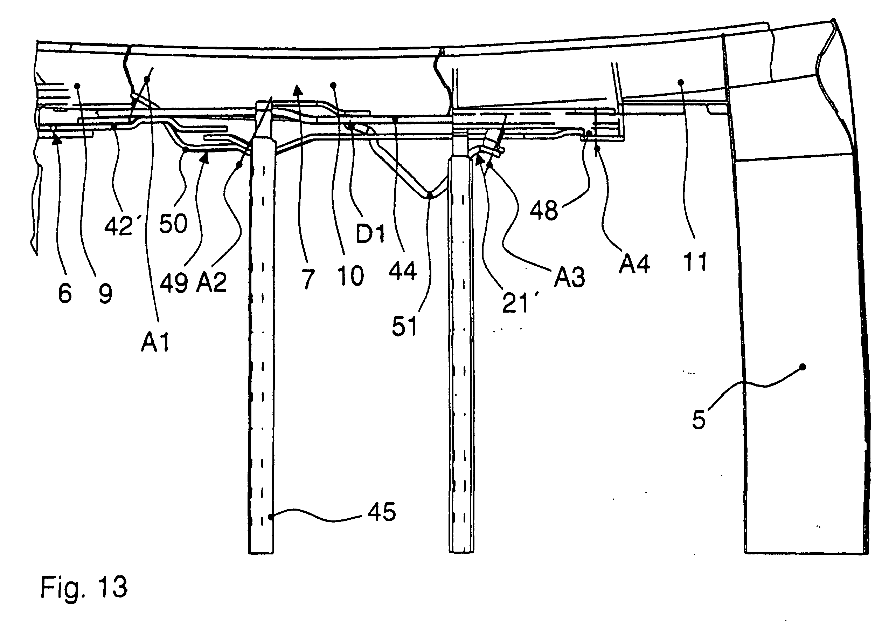

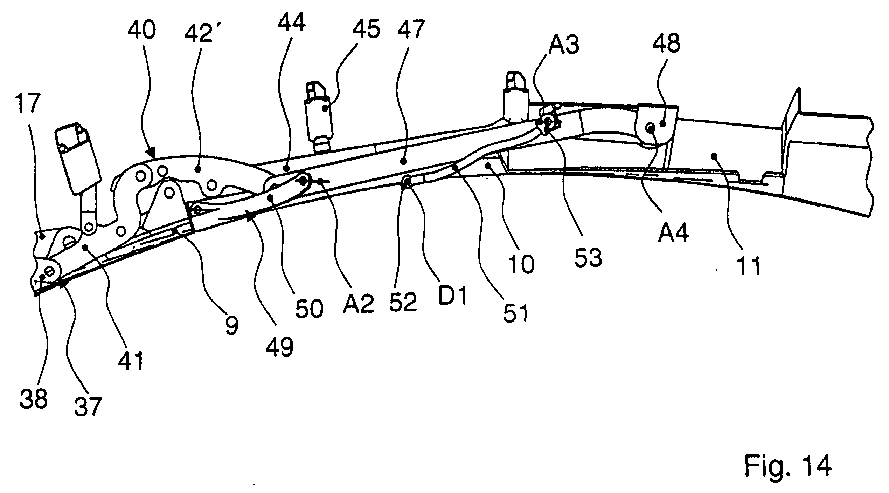

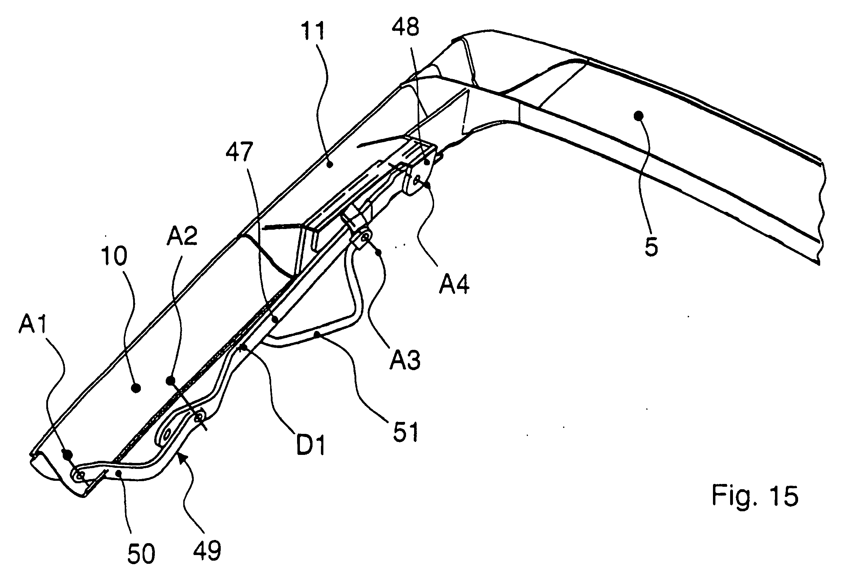

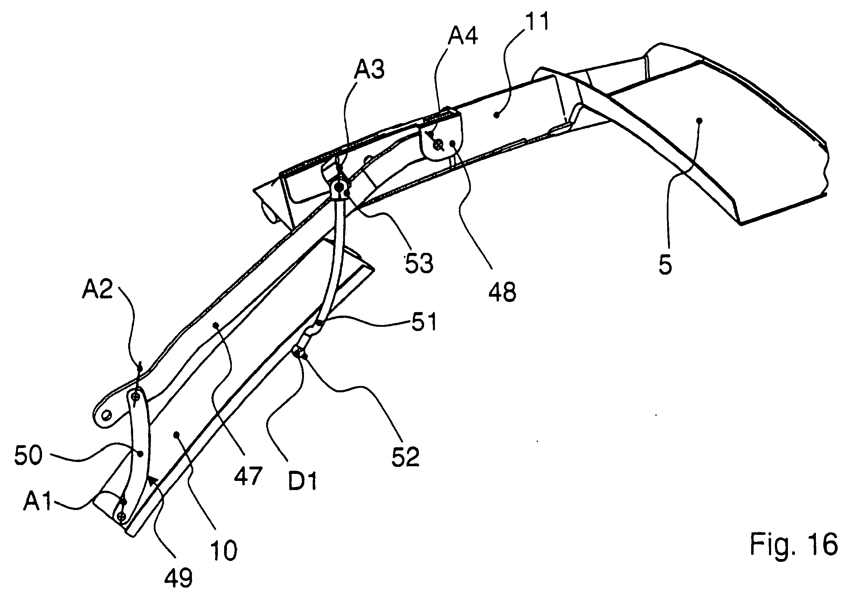

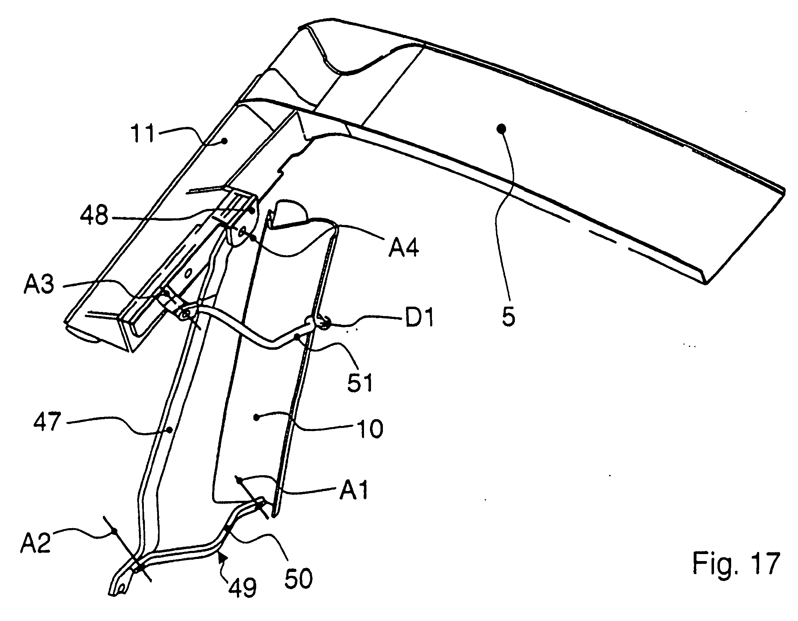

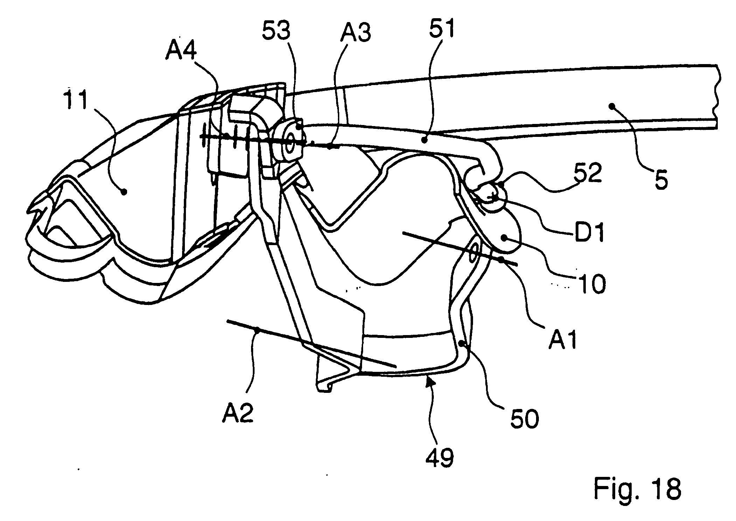

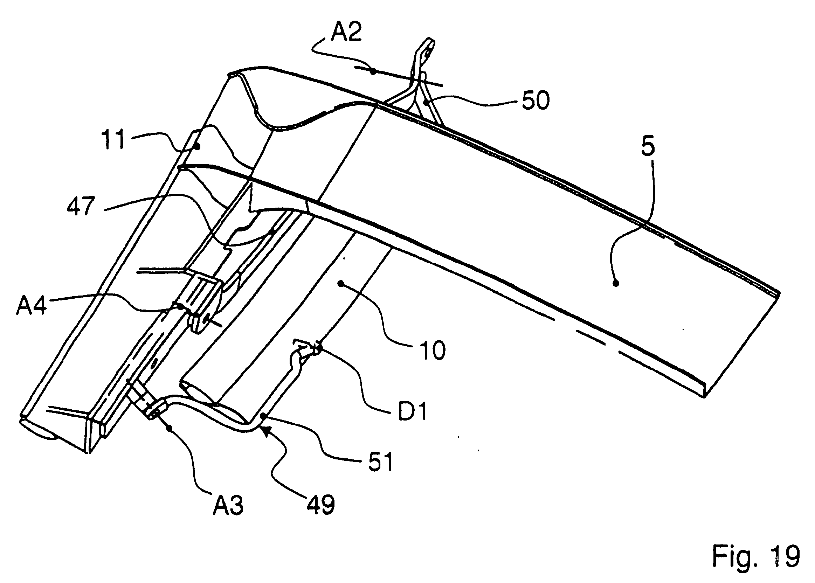

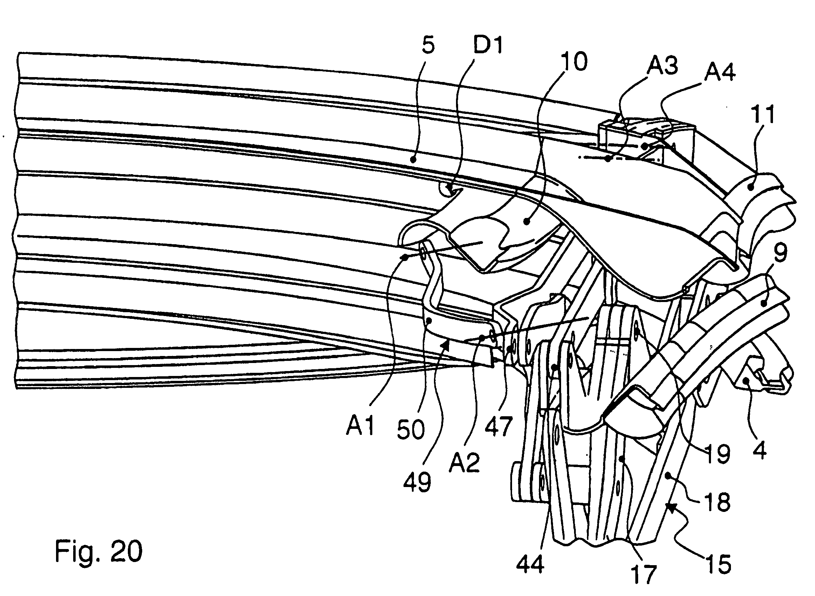

Die Fig. 13 bis Fig. 20 zeigen eine weitere Ausgestaltung des Verdeckmechanismus mit einer gegenüber der Ausführung nach Fig. 1 bis Fig. 12 modifizierten Führungseinrichtung 21' für das äußere Dachrahmenprofil 10 des mittleren Dachsegments 7, mittels der das äußere Dachrahmenprofil 10 in Richtung Fahrzeugmitte bei einer Öffnungsbewegung bzw. in umgekehrte Richtung bei einer Schließbewegung des Verdecks 1 drehbar ist.

Die Führungseinrichtung 21' weist eine an den Verdeckmechanismus gekoppelte Steuerstange 47 auf, die an einem Ende über ein Gelenk 48 mit dem Front-Dachsegment 8 bzw. mit der der Fahrzeugmitte zugewandten Seite von dessen auf der betreffenden Seite angeordnetem äußerem Dachrahmenprofil 11 verbunden ist und an dem Gelenk 48 um eine zur Fahrzeugquerachse parallele Schwenkachse A4 schwenkbar ist. An ihrem anderen Ende ist die Steuerstange 47 gelenkig an die Gelenkkette 16 des Verdeckmechanismus angebunden, wobei der zur Anbindung der Führungsstange 29 gemäß Fig. 1 bis Fig. 12 vorgesehene Schenkel 42 der zweiten Gelenkschere 40 hier durch einen ein Gelenk weniger aufweisenden Schenkel 42' ersetzt ist.

An die Steuerstange 47 ist das äußere Dachrahmenprofil 10 des mittleren Dachsegments 7 über eine Hebelanordnung 49 angelenkt, welche um drei Schrägachsen A1, A2, A3 schwenkbar ist, wobei die Schrägachsen A1, A2, A3 derart gewinkelt zur Schwenkachse A4 der Steuerstange 47 verlaufen, daß das äußere Dachrahmenprofil 10 bei einer Verschwenkung der Steuerstange 47 aus deren Position bei Schließstellung des Verdecks 1 bezüglich einer zu der Fahrzeuglängsachse 33 parallelen Achse verdreht und in Richtung Fahrzeugmitte verlagert wird.

Die Hebelanordnung 49 ist mit einem ersten Schwenkhebel 50 ausgebildet, welcher das äußere Dachrahmenprofil 10 mit der Steuerstange 47 gelenkig verbindet, wobei der erste Schwenkhebel 50 gegenüber dem äußeren Dachrahmenprofil 10 des mittleren Dachsegments 7 um eine erste Schrägachse A1 und gegenüber der Steuerstange 47 um eine zweite Schrägachse A2 verschwenkbar ist. Dabei ist die gelenkige Anbindung des ersten Schwenkhebels 50 an die Steuerstange 47 um die zweite Schrägachse A2 in einem der Verbindung der Steuerstange 47 mit dem Front-Dachsegment 8 abgewandten Endbereich der Steuerstange 47 angeordnet, und die gelenkige Anbindung des ersten Schwenkhebels 50 an das äußere Dachrahmenprofil 10 um die erste Schrägachse A1 befindet sich in einem in Schließstellung des Verdecks 1 heckwärtigen Bereich des äußeren Dachrahmenprofils 10.

Des weiteren ist die Hebelanordnung 49 mit einem zweiten Schwenkhebel 51 ausgebildet, welcher das äußere Dachrahmenprofil 10 des mittleren Dachsegments 7 mit dem Front-Dachsegment 8 bzw. bei der gezeigten Ausführung mit dessen auf der betreffenden Fahrzeugseite angeordnetem Dachrahmenprofil 11 gelenkig verbindet. Dabei ist der zweite Schwenkhebel 51 gegenüber dem äußeren Dachrahmenprofil 10 des mittleren Dachsegments 7 mittels eines in den Fig. 13 bis Fig. 20 nur schematisch angedeuteten Kugelgelenks 52 um einen Drehpunkt D1 schwenkbar. Gegenüber dem Front-Dachsegment 8 ist der zweite Schwenkhebel 51 um eine dritte Schrägachse A3 schwenkbar.

Die Anbindung des zweiten Schwenkhebels 51 an das Front-Dachsegment 8 erfolgt mittels eines Gelenks 53, welches an der der Fahrzeugmitte zugewandten Seite des äußeren Dachrahmenprofils 11 des Front-Dachsegments 8 in dessen heckwärtigem Bereich, und zwar heckwärts des Gelenks 48 zur Anbindung der Steuerstange 47 angeordnet ist. Das Kugelgelenk 52 zur Anbindung des zweiten Schwenkhebels 51 an das äußere Dachrahmenprofil 10 des mittleren Dachsegments 7 ist in einem in Schließstellung des Verdecks 1 frontwärtigen Bereich des äußeren Dachrahmenprofils 10 angeordnet.

Die Schwenkhebel 50, 51 der Hebelanordnung 49 sind jeweils gebogt ausgeführt, wobei die Biegungen der jeweiligen Schwenkhebel 50, 51 so gestaltet sind, daß sie nicht mit anderen Bauelementen kollidieren, während das äußere Dachrahmenprofil 10 des mittleren Dachsegments 7 bei einer Bewegung des Verdecks 1 zwischen dessen Endstellungen eine Kurvenbahn durchläuft und um 180° verschwenkt wird.

Bei beiden beschriebenen Ausgestaltungen des Verdeckmechanismus ist das Front-Dachsegment 8 bzw. dessen jeweiliges äußeres Dachrahmenprofil 11 derart in die Kinematik des Verdeckmechanismus eingebunden, daß es heckseitig der gelenkigen Anbindung der Führungsstange 29 bzw. der Steuerstange 47 für das äußere Dachrahmenprofil 10 des mittleren Dachsegments 7 gelenkig mit einer zu einem vorderen Bereich des äußeren Dachrahmenprofils 9 des Heck-Dachsegments 6 führenden Stange 44 verbunden, welche weiters einen von mehreren die Dachhaut 3 untergreifenden Verdeckspannspriegel 45 abstützt.

Mit den beschriebenen bevorzugten Gestaltungen des Verdeckmechanismus können die Dachsegmente 6, 7, 8 derart in ihre Faltstellung gebracht werden, daß sich unterst das Heck-Dachsegment 6, darüber das mittlere Dachsegment 7 und oberst das Front-Dachsegment 8 befindet, wobei die Dachsegmente 6, 7, 8 eng übereinander liegend mit geringer Packhöhe abgelegt werden und ihre Wölbung in Ablageposition jeweils einem Fahrzeugboden, dessen Einbaulage mit 46 in den Figuren bezeichnet ist, abgewandt ist.

## Patentansprüche

1. Verdeck für ein Cabriolet-Fahrzeug (2) mit einem Heck-Dachsegment (6), einem Front-Dachsegment (8) und wenigstens einem mittleren Dachsegment (7), wobei die Dachsegmente (6, 7, 8) symmetrisch zu einer Fahrzeuglängsachse (33) gegenüberliegende äußere Dachrahmenprofile (9, 10, 11) aufweisen und über einen Verdeckmechanismus Z-artig zusammenfaltbar sind, **dadurch gekennzeichnet,**
**daß** die Dachsegmente (6, 7, 8) in einer Faltstellung bei geöffnetem Verdeck (1) mit gleichgerichteter Wölbung im wesentlichen aufeinander liegen und die äußeren Dachrahmenprofile (10) des wenigstens einen mittleren Dachsegments (7) mittels einer Führungseinrichtung (21, 21') gegenüber einer Position bei geschlossenem Verdeck (1) um eine wenigstens annähernd zu der Fahrzeuglängsachse (33) parallele Achse gedreht und in Richtung Fahrzeugmitte verlagert sind.

2. Verdeck nach Anspruch 1,
**dadurch gekennzeichnet,**
**daß** die Dachsegmente (6, 7, 8) in der Faltstellung derart aufeinander liegen, daß ihre Wölbung jeweils einem Fahrzeugboden (46) abgewandt ist.

3. Verdeck nach Anspruch 1,
**dadurch gekennzeichnet,**
**daß** die Dachsegmente in der Faltstellung derart aufeinander liegen, daß ihre Wölbung jeweils einem Fahrzeugboden zugewandt ist.

4. Verdeck nach einem der Ansprüche 1 bis 3,
**dadurch gekennzeichnet,**
**daß** ein äußeres Dachrahmenprofil (10) des wenigstens einen mittleren Dachsegments (7) in der Faltstellung gegenüber seiner Position bei geschlossenem Verdeck (1) um wenigstens annähernd 180° gedreht ist.

5. Verdeck nach einem der Ansprüche 1 bis 4,
**dadurch gekennzeichnet,**
**daß** die Führungseinrichtung (21) des äußeren Dachrahmenprofils (10) des wenigstens einen mittleren Dachsegments (7) eine an den Verdeckmechanismus gekoppelte Führungsstange (29) aufweist, an der das äußere Dachrahmenprofil (10) derart axial verschieblich geführt ist, daß es bei einer Axialbewegung gegenüber der Führungsstange (29) um seine Längsachse gedreht wird.

6. Verdeck nach Anspruch 5,
**dadurch gekennzeichnet,**
**daß** das äußere Dachrahmenprofil (10) mit einem Nutenstein (31) in eine in die Führungsstange (29) spiralartig eingebrachte Nut (30) eingreift, wobei der Nutenstein (31) über ein Koppelelement (32) an die Kinematik des Verdeckmechanismus gekoppelt ist.

7. Verdeck nach Anspruch 6,
**dadurch gekennzeichnet,**
**daß** das Koppelelement (32) zum einen axial festgelegt und drehbeweglich mit dem Nutenstein (31) und zum anderen scharnierartig mit einem Gelenkglied (36) einer Gelenkkette (16) des Verdeckmechanismus verbunden ist.

8. Verdeck nach einem der Ansprüche 1 bis 4,
**dadurch gekennzeichnet,**
**daß** die Führungseinrichtung (21') des äußeren Dachrahmenprofils (10) des wenigstens einem mittleren Dachsegments (7) eine an den Verdeckmechanismus gekoppelte Steuerstange (47) aufweist, die um eine zur Fahrzeugquerachse parallele Schwenkachse (A4) schwenkbar ist und an der das äußere Dachrahmenprofil (10) über eine Hebelanordnung (49) angelenkt ist, wobei die Hebelanordnung (49) um Schrägachsen (A1, A2, A3) schwenkbar ist, welche derart gewinkelt zur Schwenkachse (A4) der Steuerstange (47) verlaufen, daß das äußere Dachrahmenprofil (10) bei Verschwenkung der Steuerstange (47) bezüglich einer zu der Fahrzeuglängsachse (33) parallelen Achse verdreht und in Richtung Fahrzeugmitte verlagert wird.

9. Verdeck nach Anspruch 8,
**dadurch gekennzeichnet,**
**daß** die Steuerstange (47) mit dem Front-Dachsegment (8), insbesondere mit dessen auf der betreffenden Seite angeordnetem äußerem Dachrahmenprofil (11), gelenkig verbunden ist.

10. verdeck nach Anspruch 8 oder 9,
**dadurch gekennzeichnet,**
**daß** ein erster Schwenkhebel (50) der Hebelanordnung (49) das äußere Dachrahmenprofil (10) des mittleren Dachsegments (7) mit der Steuerstange (47) gelenkig verbindet, wobei der erste Schwenkhebel (50) gegenüber dem äußeren Dachrahmenprofil (10) des mittleren Dachsegments (7) um eine erste Schrägachse (A1) und gegenüber der Steuerstange (47) um eine zweite Schrägachse (A2) verschwenkbar ist.

11. Verdeck nach Anspruch 10,
**dadurch gekennzeichnet,**
**daß** die gelenkige Anbindung des ersten Schwenkhebels (50) an die Steuerstange (47) um die zweite Schrägachse (A2) in einem der Verbindung der Steuerstange (47) mit dem Front-Dachsegment (6) abgewandten Endbereich der Steuerstange (47) angeordnet ist.

12. Verdeck nach Anspruch 10 oder 11,
**dadurch gekennzeichnet,**
**daß** die gelenkige Anbindung des ersten Schwenkhebels (50) an das äußere Dachrahmenprofil (10) um die erste Schrägachse (A1) in einem in Schließstellung des Verdecks (1) heckwärtigen Bereich des äußeren Dachrahmenprofils (10) angeordnet ist.

13. Verdeck nach einem der Ansprüche 8 bis 12,
**dadurch gekennzeichnet,**
**daß** ein zweiter Schwenkhebel (51) der Hebelanordnung (49) das äußere Dachrahmenprofil (10) des mittleren Dachsegments (7) mit dem Front-Dachsegment (8), insbesondere mit dessen auf der betreffenden Fahrzeugseite angeordnetem Dachrahmenprofil (11), gelenkig verbindet, wobei der zweite Schwenkhebel (51) gegenüber dem äußeren Dachrahmenprofil (10) des mittleren Dachsegments (7) um einen Drehpunkt (D1) und gegenüber dem Front-Dachsegment (8) um eine dritte Schrägachse (A3) schwenkbar ist.

14. Verdeck nach Anspruch 13,
**dadurch gekennzeichnet,**
**daß** die Verbindung zwischen dem zweiten Schwenkhebel (51) und dem äußeren Dachrahmenprofil (10) des mittleren Dachsegments (7) in dem Drehpunkt (D1) mittels eines Kugelgelenks (52) ausgeführt ist.

15. Verdeck nach Anspruch 13 oder 14,
**dadurch gekennzeichnet,**
**daß** die Anbindung des zweiten Schwenkhebels (51) an das Front-Dachsegment (8) in einem heckwärtigen Bereich des äußeren Dachrahmenprofils (11) des Front-Dachsegments (8) angeordnet ist.

16. Verdeck nach einem der Ansprüche 13 bis 15,
**dadurch gekennzeichnet,**
**daß** die Anbindung des zweiten Schwenkhebels (51) an das äußere Dachrahmenprofil (10) des mittleren Dachsegments (7) in einem in Schließstellung des Verdecks (1) frontwärtigen Bereich des äußeren Dachrahmenprofils (10) des mittleren Dachsegments (7) angeordnet ist.

17. Verdeck nach einem der Ansprüche 5 bis 16,
**dadurch gekennzeichnet,**
**daß** die Führungsstange (29) oder die Steuerstange (47) gelenkig an einem Ende an das Front-Dachsegment (8) und an dem anderen Ende an die Gelenkkette (16) des Verdeckmechanismus angebunden ist.

18. Verdeck nach einem der Ansprüche 1 bis 17,
**dadurch gekennzeichnet,**
**daß** wenigstens das Heck-Dachsegment (6) mit einer flexiblen Dachhaut (3) ausgebildet ist, welche zwischen den dem Heck-Dachsegment (6) zugeordneten äußeren Dachrahmenprofilen (9) aufgenommen ist und eine formstabile Heckscheibe (12) einfaßt.

19. Verdeck nach Anspruch 18,
**dadurch gekennzeichnet,**
**daß** die Heckscheibe (12) und die äußeren Dachrahmenprofile (9) des Heck-Dachsegments (6) in einer gleichsinnigen Bewegung in die Faltstellung oder aus ihr überführt werden.

20. Verdeck nach einem der Ansprüche 18 oder 19,
**dadurch gekennzeichnet,**
**daß** die Heckscheibe (12) und die äußeren Dachrahmenprofile (9) des Heck-Dachsegments (6) während ihrer Bewegung in die Faltstellung oder aus ihr im wesentlichen parallel zueinander angeordnet sind.

21. Verdeck nach einem der Ansprüche 1 bis 20,
**dadurch gekennzeichnet,**
**daß** ein äußeres Dachrahmenprofil (9) des Heck-Dachsegments (6) an einen an zwei karosseriefeste Drehpunkte (13, 14) angelenkten Viergelenk-Mechanismus (15) und an eine eine Bewegung auf die anderen Dachsegmente (7, 8) übertragende Gelenkkette (16) angebunden ist.

22. Verdeck nach Anspruch 21,
**dadurch gekennzeichnet,**
**daß** der Viergelenk-Mechanismus (15) mit einem ersten (17) und einem zweiten (18) gewinkelten Hebel ausgebildet ist, von denen jeder an einem karosseriefesten Drehpunkt (13, 14) und an dem äußeren Dachrahmenprofil (9) angelenkt ist.

23. verdeck nach Anspruch 22,
**dadurch gekennzeichnet,**
**daß** der karosseriefeste Drehpunkt (13) des ersten Hebels (17) gegenüber dem karosseriefesten Drehpunkt (14) des zweiten Hebels (18) höher und frontwärts versetzt angeordnet ist.

24. Verdeck nach einem der Ansprüche 22 oder 23,
**dadurch gekennzeichnet,**
**daß** ein Gelenk (20) zwischen dem ersten Hebel (18) und dem äußeren Dachrahmenprofil (9) in einem in Schließstellung des Verdecks (1) frontwärtigen Bereich und ein Gelenk (20) zwischen dem zweiten Hebel (18) und dem äußeren Dachrahmenprofil (9) in einem in Schließstellung des Verdecks (1) heckwärtigen Bereich des äußeren Dachrahmenprofils (9) angeordnet ist.

25. Verdeck nach einem der Ansprüche 22 bis 24,
**dadurch gekennzeichnet,**
**daß** der erste Hebel (17) wenigstens annähernd U-förmig und der zweite Hebel (18) wenigstens annähernd L-förmig ausgebildet ist, wobei die Anbindung an das äußere Dachrahmenprofil (9) und an die karosseriefesten Drehpunkte (13, 14) jeweils im Bereich eines Schenkelendes der Hebel (17, 18) angeordnet ist.

26. Verdeck nach einem der Ansprüche 22 bis 25,
**dadurch gekennzeichnet,**
**daß** vorzugsweise der erste Hebel (17) mit einem Antrieb (22) des Verdecks (1) verbunden ist.

27. Verdeck nach einem der Ansprüche 23 bis 26,
**dadurch gekennzeichnet,**
**daß** die Heckscheibe (12) über einen Gelenkbügel (25) mit dem Viergelenk-Mechanismus (15) und über die flexible Dachhaut (3) mit dem äußeren Dachrahmenprofil (9) verbunden ist.

28. Verdeck nach einem der Ansprüche 22 bis 27,
**dadurch gekennzeichnet,**
**daß** an den zweiten Hebel (18) ein Hauptverdeckspannspriegel (4) angelenkt ist.

29. Verdeck nach einem oder mehreren der vorhergehenden Ansprüche,
**dadurch gekennzeichnet,**
**daß** die Gelenkkette (16) zur Bewegungsübertragung eine erste (37) und eine zweite (40) Gelenkschere aufweist, welche zueinander gegensinnig öffnen bzw. schließen und miteinander über ein an dem äußeren Dachrahmenprofil (9) des Heck-Dachsegments (6) angeordnetes Gelenk (43) drehverbunden sind, wobei die erste Gelenkschere (37) mit dem ersten Hebel (17) des Viergelenk-Mechanismus (15) gelenkig verbunden ist und die zweite Gelenkschere (40) mit der Führungseinrichtung (21, 21') des äußeren Dachrahmenprofils (10) des mittleren Dachsegments (7) gelenkig verbunden ist.

30. Verdeck nach einem oder mehreren der vorhergehenden Ansprüche,
**dadurch gekennzeichnet,**
**daß** das äußere Dachrahmenprofil (11) des Front-Dachsegments (7) vorzugsweise heckseitig der Anbindung der Führungseinrichtung (21, 21') für das äußere Dachrahmenprofil (10) des mittleren Dachsegments (7) gelenkig mit einer zu einem vorderen Bereich des äußeren Dachrahmenprofils (6) des Heck-Dachsegments (9) führenden Stange (44) verbunden ist.

## Claims

1. Top for a cabriolet vehicle (2), said top comprising a rear roof segment (6), a front roof segment (8) and at least one central roof segment (7), said roof segments (6, 7, 8) comprising, symmetrical to a longitudinal vehicle axis (33), opposing outer roof frame profiles (9, 10, 11) and being collapsible in a Z-like manner by a top mechanism,
**characterised in that**
the roof segments (6, 7, 8) substantially overlie each other, curved in the same direction, in a folded position in which the top (1) is opened, and the outer roof frame profiles (10) of the at least one central roof segment (7) are rotated, relative to a position in which the top (1) is closed, about at least one axis which is at least approximately parallel to the longitudinal vehicle axis (33) and are shifted in the direction of the vehicle centre.

2. Top according to claim 1,
**characterised in that**
the roof segments (6, 7, 8) overlie each other in the folded position in such a manner that their curved parts are respectively turned away from a bottom (46) of the vehicle.

3. Top according to claim 1,
**characterised in that**
the roof segments overlie each other in the folded position in such a manner that their curved parts are respectively turned towards a bottom of the vehicle.

4. Top according to any one of claims 1 to 3,
**characterised in that**,
in its folded position, an outer roof frame profile (10) of the at least one central roof segment (7) is rotated by at least approximately 180° relative to its position when the top (1) is closed.

5. Top according to any one of claims 1 to 4,
**characterised in that**
the guiding means (21) of the outer roof frame profile (10) of the at least one central roof segment (7) comprises a guiding rod (29) coupled with the top mechanism, by which rod the outer roof frame profile (10) is guided in an axially displaceable manner so as to be rotated about its longitudinal axis relative to the guiding rod (29) during an axial movement.

6. Top according to claim 5,
**characterised in that**
the outer roof frame profile (10) engages a spiral-shaped slot (30) in the guiding rod (29) by means of a slot nut (31), said slot nut (31) being coupled with the kinematic system of the top mechanism via a coupling element (32).

7. Top according to claim 6,
**characterised in that**
the coupling element (32) is connected, on the one hand, in an axially defined and rotatable manner, to the slot nut (31), and, on the other hand, in a hinge-like manner, to a link (36) of a link chain (16) of the top mechanism.

8. Top according to any one of claims 1 to 4,
**characterised in that**
the guiding means (21') of the outer roof frame profile (10) of the at least one central roof segment (7) comprises a control rod (47) coupled to the top mechanism, said control rod (47) being pivotable about a pivot axis (A4), which is parallel to the transverse vehicle axis and to which the outer roof frame profile (10) is articulated by a lever arrangement (49), said lever arrangement (49) being pivotable about oblique axes (A1, A2, A3), which extend at an angle to the pivot axis (A4) of the control rod (47) such that the outer roof frame profile (10) is rotated relative to an axis parallel to the longitudinal vehicle axis (33) and is shifted towards the centre of the vehicle when the control rod (47) is being pivoted.

9. Top according to claim 8,
**characterised in that**
the control rod (47) is hinge-connected to the front roof segment (8), in particular to the outer roof frame profile (11) of the latter arranged on the respective side.

10. Top according to claim 8 or 9.
**characterised in that**
a first pivoting lever (50) of the lever arrangement (49) hinge-connects the outer roof frame profile (10) of the central roof segment (7) to the control rod (47), with the first pivoting lever (50) being pivotable relative to the outer roof frame profile (10) of the central roof segment (7) about a first oblique axis (A1) and relative to the control rod (47) about a second oblique axis (A2).

11. Top according to claim 10,
**characterised in that**
the hinge connection of the first pivoting lever (50) to the control rod (47) about the second oblique axis (A2) is arranged in an end region of the control rod (47) turned away from the connection of the control rod (47) to the front roof segment (6).

12. Top according to claim 10 or 11,
**characterised in that**
the hinge connection of the first pivoting lever (50) to the outer roof frame profile (10) about the first oblique axis (A1) is arranged in a rearward region of the outer roof frame profile (10) in the closed position of the top (1).

13. Top according to any one of claims 8 to 12,
**characterised in that**
a second pivoting fever (51) of the lever arrangement (49) hinge-connects the outer roof frame profile (10) of the central roof segment (7) to the front roof segment (8), in particular to Its roof frame profile (11) arranged on the respective side of the vehicle, said second pivoting lever (51) being pivotable relative to the outer roof frame profile (10) of the central roof segment (7) about a point of rotation (D1) and relative to the front roof segment (8) about a third oblique axis (A3).

14. Top according to claim 13,
**characterised in that**
the connection between the second pivoting lever (51) and the outer roof frame profile (10) of the central roof segment (7) in the point of rotation (D1) is effected by means of a spherical joint (52).

15. Top according to claim 13 or 14,
**characterised in that**
the connection of the second pivoting lever (51) to the front roof segment (8) is arranged In a rearward region of the outer roof frame profile (11) of the front roof segment (8).

16. Top according to any one of claims 13 to 15,
**characterised in that**
the connection of the second pivoting lever (51) to the outer roof frame profile (10) of the central roof segment (7) is arranged in a forward region of the outer roof frame profile (10) of the central roof segment (7) in the closed position of the top (1).

17. Top according to any one of claims 5 to 16.
**characterised in that**
the guiding rod (29) or the control rod (47) is hinge-connected at one end to the front roof segment (8) and at the other end to the link chain (16) of the top mechanism.

18. Top according to any one of claims 1 to 17,
**characterised in that**
at least the rear roof segment (6) is provided with a flexible roof membrane (3), which is received between the roof frame profiles (9) associated with the rear roof segment (6) and encloses a form stable rear window (12).

19. Top according to claim 18.
**characterised in that**
the rear window (12) and the outer roof frame profiles (9) of the rear roof segment (6) are guided into or out of the folded position by a movement in the same direction.

20. Top according to any one of claims 18 or 19,
**characterised in that**
the rear window (12) and the outer roof frame profiles (9) of the rear roof segment (6) are arranged substantially parallel to one another during their movement into or out of the folded position.

21. Top according to any one of claims 1 to 20,
**characterised in that**
an outer roof frame profile (9) of the rear roof segment (6) is connected to a four-joint mechanism (15) that is articulated to two vehicle body-fixed points of rotation (13, 14) and to a link chain (16) transmitting a movement to the other roof segments (7, 8).

22. Top according to claim 21,
**characterised in that**
the four-joint mechanism (15) is formed with a first (17) and a second (18) angled lever, each of which is articulated to a respective vehicle body-fixed point of rotation (13, 14) and to the outer roof frame profile (9).

23. Top according to claim 22,
**characterised in that**
the vehicle body-fixed point of rotation (13) of the first lever (17) is arranged higher and forwardly staggered relative to the vehicle body-fixed point of rotation (14) of the second lever (18).

24. Top according to any one of claims 22 or 23,
**characterised in that**
a joint (20) is arranged between the first lever (18) and the outer roof frame profile (9) in a region that is forwardly located in the closed position of the top (1) and a joint (20) is arranged between the second lever (18) and the outer roof frame profile (9) in a region of the outer roof frame profile (9) that is rearwardly located in the closed position of the top (1).

25. Top according to any one of claims 22 to 24,
**characterised in that**
the first lever (17) is at least approximately U-shaped and the second lever (18) is at least approximately L-shaped, the connection to the outer roof frame profile (9) and to the vehicle body-fixed points of rotation (13, 14) respectively being arranged in the region of the end of a leg of the levers (17, 18).

26. Top according to any one of claims 22 to 25,
**characterised in that**
the first lever (17) is preferably connected to a drive (22) of the top (1).

27. Top according to any one of claims 23 to 26,
**characterised in that**
the rear window (12) is connected to the four-joint mechanism (15) by a joint bracket (25) and to the outer roof frame profile (9) by the flexible roof membrane (3).

28. Top according to any one of claims 22 to 27.
**characterised in that**
a main top-tightening stick (4) is articulated to the second lever (18).

29. Top according to one or more of the preceding claims,
**characterised in that**
the link chain (16) comprises first (37) and second (40) joint claws for transmission of movement, which open and close, respectively, In opposite directions relative to each other and are rotatably connected to each other via a joint (43) arranged on the outer roof frame profile (9) of the rear roof segment (6), the first joint claw (37) being hinge-connected to the first lever (17) of the four-joint mechanism (15) and the second joint claw (40) being hinge-connected to the guiding means (21, 21') of the outer roof frame profile (10) of the central roof segment (7).

30. Top according to one or more of the preceding claims,
**characterised in that**
the outer roof frame profile (11) of the front roof segment (7) is hinge-connected, preferably rearwardly of the connection for of the guiding means (21, 21') for the outer roof frame profile (10) of the central roof segment (7), to a rod (44) leading to a front region of the outer roof frame profile (6) of the rear roof segment (9).

## Revendications

1. Capote pour une voiture du type cabriolet (2) comprenant un segment de toit arrière (6), un segment de toit avant (8) et au moins un segment de toit médian (7), les segments de toit (6, 7, 8) présentant, symétriques à un axe longitudinal de voiture (33), des profilés extérieurs de cadre de toit (9, 10, 11) opposés et pouvant être pliés en "Z" au moyen d'un mécanisme de capote, **caractérisée en ce qu'**en position pliée lorsque la capote (1) est ouverte, les segments de toit (6, 7, 8) reposent sensiblement les uns sur les autres à courbure orientée dans la même direction et **en ce que** les profilés extérieurs de cadre de toit (10) de l'au moins un segment de toit médian (7) sont gauchis au moyen d'un dispositif de guidage (21, 21') par rapport à une position lorsque la capote (1) est fermée autour d'un axe au moins approximativement parallèle à l'axe longitudinal (33) de la voiture et déplacés en direction du centre de la voiture.

2. Capote selon la revendication 1, **caractérisée en ce que** les segments de toit (6, 7, 8) reposent les uns sur les autres, en position pliée, de telle façon que leur courbure est à chaque fois opposée à un plancher de voiture (46).

3. Capote selon la revendication 1, **caractérisée en ce que** les segments de toit reposent les uns sur les autres, en position pliée, de telle façon que leur courbure est à chaque fois en regard d'un plancher de voiture.

4. Capote selon l'une quelconque des revendications 1 à 3, **caractérisée en ce qu'**un profilé extérieur de cadre de toit (10) de l'au moins un segment de toit médian (7) est pivoté en position pliée, par rapport à sa position lorsque la capote (1) est fermée, d'au moins approximativement 180°.

5. Capote selon l'une quelconque des revendications 1 à 4, **caractérisée en ce que** le dispositif de guidage (21) du profilé extérieur de cadre de toit (10) de l'au moins un segment de toit médian (7) présente une tige de guidage (29) accouplée au mécanisme de capote, sur laquelle le profilé extérieur de cadre de toit (10) est guidé déplaçable axialement de telle façon qu'il est pivoté autour de son axe longitudinal lors d'un mouvement axial par rapport à la tige de guidage (29).

6. Capote selon la revendication 5, **caractérisée en ce que** le profilé extérieur de cadre de toit (10) vient en prise par un écrou de rainure (31) dans une gorge (30) ménagée dans la tige de guidage (29) à la manière d'une spirale, l'écrou de rainure (31) étant accouplé par un élément d'accouplement (32) à la cinématique du mécanisme de capote.

7. Capote selon la revendication 6, **caractérisée en ce que** l'élément d'accouplement (32) est d'une part fixé axialement et relié pivotant au coulisseau (31) et d'autre part relié de manière articulée à une articulation (36) d'une chaîne articulée (16) du mécanisme de capote.

8. Capote selon l'une quelconque des revendications 1 à 4, **caractérisée en ce que** le dispositif de guidage (21') du profilé extérieur de cadre de toit (10) de l'au moins un segment de toit médian (7) présente une tige de commande (47) accouplée au mécanisme de capote, pouvant être pivotée autour d'un axe de pivotement (A4) parallèle à l'axe transversal de la voiture, et sur laquelle est articulé le profilé extérieur de cadre de toit (10) au moyen d'un ensemble de leviers (49), l'ensemble de leviers (49) pouvant être pivoté autour d'axes obliques (A1, A2, A3), qui s'étendent en formant un angle avec l'axe de pivotement (A4) de la tige de commande (47) tel que lors du pivotement de la tige de commande (47), le profilé extérieur de cadre de toit (10) est gauchi par rapport à un axe parallèle à l'axe longitudinal (33) de la voiture et déplacé vers le centre de la voiture.

9. Capote selon la revendication 8, **caractérisée en ce que** la tige de commande (47) est reliée articulée au segment de toit avant (8), en particulier à son profilé extérieur de cadre de toit (11) disposé sur le côté concerné.

10. Capote selon la revendication 8 ou 9, **caractérisée en ce qu'**un premier levier pivotant (50) de l'ensemble de leviers (49) relie de manière articulée le profilé extérieur de cadre de toit (10) du segment de toit médian (7) à la tige de commande (47), le premier levier pivotant (50) pouvant être pivoté par rapport au profilé extérieur de cadre de toit (10) du segment de toit médian (7) autour d'un premier axe oblique (A1) et par rapport à la tige de commande (47), autour d'un deuxième axe oblique (A2).

11. Capote selon la revendication 10, **caractérisée en ce que** la liaison articulée du premier levier pivotant (50) à la tige de commande (47) autour du deuxième axe oblique (A2) est disposée dans une zone d'extrémité de la tige de commande (47) opposée à la liaison de la tige de commande (47) au segment de toit avant (6).

12. Capote selon la revendication 10 ou 11, **caractérisée en ce que** la liaison articulée du premier levier pivotant (50) au profilé extérieur de cadre de toit (10) autour du premier axe oblique (A1) est disposé dans une zone du profilé extérieur de cadre de toit (10) dirigée vers l'arrière quand la capote (1) est en position fermée.

13. Capote selon l'une quelconque des revendications 8 à 12, **caractérisée en ce qu'**un deuxième levier pivotant (51) de l'ensemble de leviers (49) relie de manière articulée le profilé extérieur de cadre de toit (10) du segment de toit médian (7) au segment de toit avant (8), plus particulièrement au profilé de cadre de toit (11) de celui-ci disposé sur le côté concerné de la voiture, le deuxième levier pivotant (51) pouvant être pivoté par rapport au profilé extérieur du cadre de toit (10) du segment de toit médian (7) autour d'un point d'appui (D1) et par rapport au segment de toit avant (8), autour d'un troisième axe oblique (A3).

14. Capote selon la revendication 13, **caractérisée en ce que** la liaison entre le deuxième levier pivotant (51) et le profilé extérieur de cadre de toit (10) du segment de toit médian (7) est réalisée dans le point d'appui (D1) au moyen d'une articulation à rotule (52).

15. Capote selon la revendication 13 ou 14, **caractérisée en ce que** la liaison du deuxième levier pivotant (51) au segment de toit avant (8) est disposée dans une zone dirigée vers l'arrière du profilé extérieur de cadre de toit (11) du segment de toit avant (8).

16. Capote selon l'une quelconque des revendications 13 à 15, **caractérisée en ce que** la liaison du deuxième levier pivotant (51) au profilé extérieur de cadre de toit (10) du segment de toit médian (7) est disposée dans une zone dirigée vers l'avant du profilé extérieur de cadre de toit (10) du segment de toit médian (7) lorsque la capote (1) est en position fermée.

17. Capote selon l'une quelconque des revendications 5 à 16, **caractérisée en ce que** la tige de guidage (29) ou la tige de commande (47) est reliée articulée par une extrémité au segment de toit avant (8) et par l'autre extrémité à la chaîne articulée (16).

18. Capote selon l'une quelconque des revendications 1 à 17, **caractérisée en ce qu'**au moins le segment de toit arrière (6) est réalisé pour former une couverture de toit (3) flexible, qui est logée entre les profilés extérieurs de cadre de toit (9) assujettis au segment de toit arrière (6) et entoure une vitre arrière (12) indéformable.

19. Capote selon la revendication 21, **caractérisée en ce que** la vitre arrière (12) et les profilés extérieurs de cadre de toit (9) du segment de toit arrière (6) sont amenés par un mouvement de même sens dans la position pliée ou hors de celle-ci.

20. Capote selon l'une quelconque des revendications 18 ou 19, **caractérisée en ce que** la vitre arrière (12) et les profilés extérieurs de cadre de toit (9) du segment de toit arrière (6) sont disposés sensiblement parallèles entre eux durant leur mouvement d'amenée en position de pliage ou hors de celle-ci.

21. Capote selon l'une quelconque des revendications 1 à 20, **caractérisée en ce qu'**un profilé extérieur de cadre de toit (9) du segment de toit arrière (6) est relié à un mécanisme à quatre points articulés (15) articulé à deux points d'appui (13, 14) fixes par rapport à la carrosserie, et à une chaîne articulée (16) transmettant un mouvement aux autres segments de toit (7, 8).

22. Capote selon la revendication 21, **caractérisée en ce que** le mécanisme à quatre points articulés (15) comporte un premier (17) et un deuxième (18) leviers coudés, dont chacun est articulé à un point d'appui (13, 14) fixe par rapport à la carrosserie et au profilé extérieur de cadre de toit (9).

23. Capote selon la revendication 22, **caractérisée en ce que** le point d'appui (13) fixe par rapport à la carrosserie du premier levier (17) est décalé plus haut et vers l'avant par rapport au point d'appui (14) fixe par rapport à la carrosserie du deuxième levier (18).

24. Capote selon l'une quelconque des revendications 22 ou 23, **caractérisée en ce qu'**une articulation (20) est disposée entre le premier levier (17) et le profilé extérieur de cadre de toit (9) dans une zone de celui-ci dirigée vers l'avant quand la capote (1) est en position fermée, et qu'une articulation (20) est disposée entre le deuxième levier (18) et le profilé extérieur de cadre de toit (9) dans une zone du profilé extérieur de cadre de toit (9) dirigée vers l'arrière quant la capote (1) est en position fermée.

25. Capote selon l'une quelconque des revendications 22 à 24, **caractérisée en ce que** le premier levier (17) est conformé au moins approximativement en "U" et le deuxième levier (18) au moins approximativement en "L", la liaison au profilé extérieur de cadre de toit (9) et aux points d'appui (13, 14) fixes par rapport à la carrosserie étant disposée à chaque fois dans la zone d'une extrémité de branche des leviers (17, 18).

26. Capote selon l'une quelconque des revendications 22 à 25, **caractérisée en ce que** le premier levier (17) est relié de préférence à un entraînement de la capote (1).

27. Capote selon l'une quelconque des revendications 23 à 26, **caractérisée en ce que** la vitre arrière (12) est reliée au mécanisme à quatre points articulés (15) par un étrier articulé (25) et, par la couverture de toit (3) flexible, au profilé extérieur de cadre de toit (9)

28. Capote selon l'une quelconque des revendications 6 à 11, **caractérisée en ce qu'**au deuxième levier (18) est articulé un arceau principal de tension de capote (4).

29. Capote selon l'une ou plusieurs des revendications précédentes, **caractérisée en ce que** la chaîne articulée (16) présente, pour la transmission du mouvement, un premier (37) et un deuxième (40) compas articulé, ouvrant ou fermant en sens inverse l'un par rapport à l'autre et reliés entre eux à pivotement par une articulation (43) disposée sur le profilé extérieur de cadre de toit (9) du segment de toit arrière (6), le premier compas articulé (37) étant relié articulé au premier levier (17) du mécanisme à quatre points articulés (15) et le deuxième compas articulé (40) étant relié articulé au dispositif de guidage (21, 21') du profilé extérieur de cadre de toit (10) du segment de toit médian (7).

30. Capote selon l'une ou plusieurs des revendications précédentes, **caractérisée en ce que** le profilé extérieur de cadre de toit (11) du segment de toit avant (7) est relié articulé à une tige (44) menant à la zone avant du profilé extérieur de cadre de toit (6) du segment de toit arrière (9), de préférence à l'arrière de la liaison du dispositif de guidage (21, 21') pour le profilé extérieur de cadre de toit (10) du segment de toit médian (7).
